# EUROPÄISCHE PATENTSCHRIFT

(11) **EP 2 698 085 B1**
(45) Veröffentlichungstag und Bekanntmachung des Hinweises auf die Patenterteilung: **04.06.2014**
(21) Anmeldenummer: 13180214.2
(22) Anmeldetag: 13.08.2013
(51) Int. Cl.: A47J 27/14, A47J 27/56, F24C 1/00

(54) **Verfahren zum Zubereiten von heißer Milch in einem Garraum und Gargerät zum Durchführen des Verfahrens**
Method for preparing hot milk in a cooking chamber and cooking appliance for carrying out the method
Procédé de préparation de lait chaud dans un compartiment de cuisson et appareil de cuisson permettant de mettre en oeuvre le procédé

(30) Priorität: 14.08.2012 DE 102012016082
(43) Veröffentlichungstag der Anmeldung: 19.02.2014
(73) Patentinhaber: MKN Maschinenfabrik Kurt Neubauer GmbH & Co. KG, 38300 Wolfenbüttel (DE)
(72) Erfinder: Nowacki, Sven, 40476 Düsseldorf (DE); Ruhe, Dirk, 38667 Bad Harzburg (DE)
(74) Vertreter: Strobel, Wolfgang

(56) Entgegenhaltungen:
- EP-A1- 2 345 350
- DE-C- 834 278

## Beschreibung

Die vorliegende Erfindung betrifft ein Verfahren zum Zubereiten von heißer Milch in einem Garraum, der einen beheizbaren Garraumboden und eine umlaufende Wandung aufweist.

Heiße Milch wird in einer Vielzahl von Fällen benötigt, nicht nur in privaten Haushalten, sondern insbesondere auch in einem gewerblichen Umfeld, wie Küchen, Kantinen, Gaststätten, Hotels, Krankenhäusern, Kreuzfahrtschiffen, also in jenen Bereichen, wo eine Vielzahl von Nahrungsmitteln benötigt wird, für die heiße Milch entweder als Zugabe zu anderen Ausgangsstoffen, als eigenes Produkt oder als ein wesentliches Ausgangsprodukt für eine fertige Speise benötigt wird, wie beispielsweise für Milchreis oder Pudding auf Milchbasis.

Gerade in Großlüchen wird zur Zubereitung von heißer Milch ein Gargerät mit einem Garraum eingesetzt. In der Regel umfasst das Gargerät einen Tiegel bzw. ist in Tiegelbauform, wobei der Tiegel einen Garraumboden aufweist, der beheizbar ist. Vom Garraumboden ragt eine Garraumwand nach oben, die dann gemeinsam mit dem Boden eine Garraumwandung bildet, die den nach oben offenen Garraum umschließt, wobei weiterhin ein Deckel vorgesehen ist, mit dem der Garraum von oben verschließbar ist.

Die Zubereitung heißer Milch oder heißer oder warmer Speisen auf Milchbasis ist in Großküchen ein seit langer Zeit viele Probleme hervorrufender Vorgang, der aufgrund der Wichtigkeit von heißer Milch nicht vermieden oder ersetzt werden kann. Bekannterweise besteht bei der Zubereitung heißer Milch die erhebliche Gefahr des Anbrennens der Milch. Es entsteht eine chemische Reaktion der Milch an den benachbarten Abschnitten des Garraums, insbesondere am Garraumboden, wenn diese Abschnitte Temperaturen von mehr als 100°C aufweisen.

Zur Vermeidung dieses Problems gibt es im privaten Haushaltsbereich spezielle sogenannte Milchkocher, die einen direkten Kontakt der Milch mit derart heißen Flächen vermeiden. Ein Milchkocher weist eine Wasserzwischenschicht auf, durch die die Temperatur begrenzt werden kann. Dazu wird eine separate Kammer geschaffen, die mit Wasser gefüllt ist. Die Kammer mit dem Wasser wird auf eine Temperatur erhitzt, die bei maximal 100°C liegt. Die Wärmeübertragung zur Milch oberhalb dieser Kammer erfolgt bauformabhängig mit einem geringen Verlust, so dass die Milch mit einer Temperatur von weniger als 100°C beaufschlagt wird und selbst eine Temperatur von ca. 95°C erreicht.

Aus der DE-C-834 278 ist ein Kochgerät mit vergrößerter Heizfläche, das einen Garraum aufweist, der einen mittels Heizelementen aufheizbaren Garraumboden aufweist, wobei die Heizelemente in der Lage sind, den Garraumboden gleichmäßig aufzuheizen, und wobei wenigstens ein zusätzliches Wärmespeicherelement vorgesehen ist.

Für den Einsatz in Großküchen sind derartige Haushaltsgeräte ungeeignet. Anodererseits ist es unpraktikabel und ökonomisch nicht sinnvoll, teure Großküchengeräte ausschließlich für den sehr speziellen Verwendungszweck des Erhitzens von Milch einzusetzen. Ein solches zusätzliches Gerät in einer Großküche benötigt Platz, muss separat betrieben werden, erfordert zusätzliche elektrische Anschlüsse oder muss in anderer Weise in ein größeres System eingebunden werden.

Bei Gargeräten, die einen Garraum mit einem Boden und eine umlaufende Wandung besitzen, ist das Vorsehen einer solchen separaten Kammer nicht möglich bzw. unerwünscht. Der Garraumboden dient für eine Vielzahl von Anwendungsfällen, neben der Zubereitung von Gemüse auch der Zubereitung von Fleisch, die bei sehr viel höheren Temperaturen stattfinden muss, was durch die separate Wasserkammer zwischen den Heizelementen und dem Garraumboden verhindert würde.

Für den Einsatz in Großküchen muss daher eine andere Lösung gefunden werden, bei der ein Anbrennen der Milch vermieden werden kann.

Um ein solches Anbrennen möglichst zu verhindern, d.h. den chemischen Reaktionen zwischen der Milch und einer heißen Wandung bzw. einem heißen Garraumboden zu begegnen, wird herkömmlich versucht, besonders langsam und schonend die Milch zu erhitzen. Das ist schon in einem Haushalt schwierig, in einer Großküche ist dies sehr problematisch, da durch eine lange Zubereitungszeit auch eine entsprechende Nutzung des Gargeräts für andere Zwecke nicht möglich ist. Hinzu kommt, dass auch bei diesem langsamen Aufkochen oder Aufheizen der Milch ein Anbrennen nicht zuverlässig verhindert werden kann.

Wenn ein Anbrennen der Milch stattgefunden hat, tritt eine erhebliche Verschmutzung des Tiegelbodens aufgrund der angebrannten Milch auf. Hinzu kommt, dass es bei leicht angebrannten Garraumböden, insbesondere Tiegelböden, aufgrund der entstandenen Ablagerungen zu einer weiteren Verstärkung dieser Ablagerungen im nächsten Schritt kommt, da sich die chemischen Reaktionen dann vermehrt fortsetzen und es somit zu anwachsenden starken Verschmutzungen kommt.

So ist beispielsweise die Zubereitung von Milchreis in Gemeinschaftsverpflegungen bei den für die Zubereitung und mehr noch bei den für die Reinigung der Gargeräte zuständigen Personen besonders unbeliebt. Aufgrund der Betriebsabläufe und der Personalstruktur bzw. der Anzahl der Personen ist es in einer Gemeinschaftsverpflegung traditionell nahezu unmöglich, ohne ein regelmäßiges bzw. ununterbrochenes Rühren der aufzukochenden Milch ein Anbrennen zu verhindern. Dieses Rühren ist einerseits unerwünscht, weil dadurch das Personal gebunden wird, und andererseits wieder unzuverlässig, da durch einen kurzen Moment der Unaufmerksamkeit doch wieder ein Anbrennen stattfindet, was bei Milch nicht wieder rückgängig gemacht werden kann.

Es gibt daher in der Praxis durchaus die Tendenz, den Milchreis während des Zubereitungsvorgangs ganz bewusst nicht umzurühren. Da den mit der Zubereitung befassten Personen, insbesondere dem Koch, die Problematik bekannt ist, nimmt er bewusst einen gewissen Verlust bzw. eine große Verschmutzung im Bodenbereich des Garraums in Kauf. Da diese Verschmutzung aber nicht verrührt wird, kann zumindest der auf diese Weise nicht betroffene Rest des Gargutes oberhalb der Verschmutzungsbereiche als wunschgemäß hergestellte Speise, insbesondere Milchreis, verwendet werden.

Nachdem die noch zu verzehrbare Menge des heißen Milchreises ausgegeben wurde, besteht das Problem, die angebrannten Milchspeisereste in einem Reinigungsschritt wieder aus dem Garraum zu entfernen. Gerade die bei der chemischen Reaktion zwischen Milch und der Wandung bzw. dem Garraumboden des Garraums entstehende Verschmutzung ist besonders schlecht zu entfernen. Es ist durchaus möglich, dass die Reinigung der Gargeräte in solchen Fällen länger dauert als die Zubereitung der Speise selbst. Dies führt zur Frustration des mit der Reinigung befassten Personals, was dazu führt, dass das Personal bereits zu Beginn seiner Tätigkeit missgestimmt ist, wenn klar wird, dass Milchreis hergestellt werden soll und somit später die zur Durchführung des Garvorganges verwendeten Geräte gereinigt werden müssen.

Der Einsatz von automatischen Rührern ist nicht nur kostspielig, sondern führt nicht sicher zur Verhinderung des Anbrennens der Milch.

Der vorliegenden Erfindung liegt deshalb die Aufgabe zugrunde, ein verbessertes Verfahren vorzuschlagen, mit denen bei der Zubereitung heißer Milch und daraus hergestellter Milchspeisen die Verschmutzung bzw. das Anbrennen der Milch weitestgehend vermieden wird.

Diese Aufgabe wird erfindungsgemäß durch ein Verfahren gelöst, das die folgenden Schritte aufweist:
- Gleichmäßiges Aufheizen des beheizbaren Garraumbodens auf eine Temperatur gleich oder größer 100°C und Bereitstellen einer großen Wärmeenergiemenge, vorzugsweise mittels eines WärmeenergieSpeicherelements,
- Einfüllen einer Menge Wasser in den Garraum, die im Vergleich zur Menge der zuzubereitenden Milch gering ist, ,
- Verdampfen des Wassers bis maximal auf eine Restmenge, die den Garraumboden gerade noch bedeckt,
- Einfüllen der Menge der zuzubereitenden Milch zu der Restmenge des Wassers,
- Erhitzen der Milch auf die gewünschte Temperatur, wobei aufgrund der bereitgestellten großen Wärmeenergiemenge ein deutliches Abkühlen des beheizbaren Garraumbodens vermieden wird.

Durch das erfindungsgemäße Verfahren hat sich für den Fachmann gänzlich überraschend ergeben, dass ein Anbrennen der zuzubereitenden Milch praktisch unterbunden werden kann, was zu dem weiteren großen Vorteil des entsprechend verringerten Reinigungsaufwandes führt.

An sich besteht die Tendenz des Fachmanns, die Hitze möglichst langsam und vorsichtig über den Garraumboden der zuzubereitenden Milch zuzuführen. Von dieser Tendenz wird erfindungsgemäß jedoch gerade abgewichen und praktisch das Gegenteil gemacht. Es wird zunächst eine sehr große Hitze in den Garraumboden eingeführt und zudem eine große Wärmeenergiemenge bereitgestellt, was nach den bisherigen Erkenntnissen des Fachmanns ein Anbrennen der Milch fördern würde.

Durch das Einfüllen einer Menge Wasser auf den vorgeheizten Garraumboden, die im Vergleich zur Menge der zuzubereitenden Milch gering ist, findet ein sofortiges Verdampfen des Wassers aufgrund der hohen Temperatur des Garraumbodens statt, wodurch die Oberfläche des Garraumbodens abgekühlt wird. Der Garraumboden als solcher behält jedoch seine Wärmeenergie in nahezu ungeschmälertem Umfang bei, weil nur seine Oberfläche kurzfristig durch das eingefüllte Wasser und den Verdampfungsvorgang abkühlt. Die Zufuhr des Wassers auf die heiße Oberfläche des Garraumbodens führt dazu, dass an keiner Stelle des Garrumbodens eine Temperatur von mehr als 100°C herrscht und sogenannte "Hotspots" durch das verdampfende Wasser vermieden werden können, wobei an Stellen, die heißer sind als andere mehr Wasser verdampft und aus der Umgebung weiteres Wasser nachfließen kann, was derartige "Hotspots" auch nach Einfüllen des Wassers nicht entstehen läßt.

Bevor das Wasser vollständig verdampft ist bzw. solange zumindest ein Wasserfilm die Oberfläche des Garraumbodens vollständig benetzt, also bevor der Abkühlungseffekt wieder verschwindet, wird nun die zuzubereitende Menge an Milch eingefüllt.

Die Milch trifft jetzt auf eine Oberfläche, deren Temperatur an keiner Stelle 100°C überschreitet, so dass es in diesem Moment keinerlei Anbrennen gibt.

Der Garraumboden ist jedoch aufgrund der bereitgestellten großen Wärmeenergiemenge unverändert heiß und die Wärmeenergie gelangt nun unmittelbar nach diesem Einfüllvorgang in vollem Umfang an die Milch. Allerdings erreicht die Temperatur der Oberfläche des Garraumbodens auch im weiteren Verlauf zu keinem Zeitpunkt eine Temperatur von mehr als 100°C, so dass auch kein "Hotspot" entsteht. Ein Anbrennen ist damit verhindert. Das liegt vor allem daran, dass, wie Tests gezeigt haben, die Milch nach dem beschleunigten Start kontinuierlich in eine erhebliche Bewegung versetzt wird, und sich permanent selbst vermischt. Dies führt dazu, dass die eingebrachte Wärmeenergie in der aufzuheizenden Milch kontinuierlich gleichmäßig verteilt wird. Es findet somit eine gleichmäßige Konvektion der Wärme in der Milch statt.

Die Vergleichmäßigung des Wärmeeintrags wird bei dem eingesetzten Gargerät erfindungsgemäß dadurch erreicht, dass die nachgeführte Wärmeenergie weitestgehend gleichmäßig über die gesamte Fläche des Garraumbodens dem Gargut zugeführt wird.

Wie sich herausgestellt hat, ist der Effekt des Startens entscheidend. Dadurch, dass die Milch weder auf eine kalte Oberfläche einer noch nicht aufgeheizten Bodenfläche des Garraums trifft, somit statisch bleibt und anschließend bei einer Aufheizung anbrennt, noch auf eine bereits vorgeheizte heiße Platte des Garrumbodens trifft, die mehr als 100°C warm ist, auf der sie sofort anbrennt, bevor sie in Bewegung gerät, sondern auf einen Garraumboden mit einer Oberfläche mit einer Temperatur von knapp unterhalb von 100°C trifft, kann ein Anbrennen überraschenderweise vermieden werden, wobei ein sofortiger weiterer Wärmeeintrag in die Milch erfolgt, was zu einer entsprechenden inneren Bewegung der Milchpartikel führt, so dass ein vergleichmäßigender Eintrag der Wärme geschaffen wird und an keiner Stelle ein Anbrennen der Milch mehr auftritt.

Besonders bevorzugt ist dabei vorgesehen, dass das eingesetzte Gargerät über eine ausreichende Wärmeenergiespeicherfähigkeit in dem zum Heizen eingesetzten Garraumboden verfügt. Durch eine solche Wärmeenergiespeicherfähigkeit kann vermieden werden, dass beim Einfüllen von kalter Milch die Temperatur des Garraumbodens soweit absinkt oder gar einbricht, dass der Garraumboden insgesamt zu kalt wird, um eine möglicherweise große Menge an Milch erwärmen zu können. Durch diese ausreichende Wärmeenergiespeicherfähigkeit wird stets sichergestellt, dass es auch zu einer ausreichenden Durchmischung der Milch kommen kann und somit die Milch nicht anbrennt.

Die vorgenannten Effekte sind darüber hinaus sehr gleichmäßig, da das voreingefüllte Wasser auch eine sehr gleichmäßige Abkühlung und einen flächenmäßig gleichen Wärmegradienten in die Oberfläche des Garraumbodens eingebracht hat. Diese damit geschaffene gleichmäßige Wärmezufuhr trägt entscheidend dazu bei, dass jetzt trotz der raschen Erhitzung der an den Garraumboden grenzenden Milch kein Anbrennen stattfindet. Mit den herkömmlichen Rührvorgängen kann ein derartiges gleichmäßiges Einbringen von Wärme nicht erreicht werden.

Mit einer genau regelbaren und besonders gleichmäßigen Heizung lässt sich die Wärmeverteilung und -speicherung im Garraumboden noch zusätzlich verbessern.

Ein weiterer eintretender Effekt durch das erfindungsgemäße Verfahren besteht darin, dass beim Eingießen der Milch das noch vorhandene Wasser ein Anhaften der Milchpartikel im Moment des Einfüllens in den Garrum am Garraumboden verhindert. Dadurch, dass ein Anhaften der Milch am Garraumboden nicht stattfindet, wird ein sofort einsetzender Durchmischungsvorgang der Milchpartikel ausgehend vom unteren Bereich der Milch benachbart zum Garraumboden aufgrund des Temperaturgefälles in der Milch unterstützt. Dieses Temperaturgefälle entsteht dadurch, dass die Wärmeenergie von unten über den Garraumboden die Milch zunächst in deren unteren Abschnitte eingeleitet wird und aufgrund seiner gleichmäßigen Einleitung sich auch gleichmäßig in der Milch verteilt.

Besonders bevorzugt ist es, dass beim Aufheizen des Garraumbodens dessen Oberfläche auf eine Temperatur von zwischen 100°C und 200°C, weiter bevorzugt zwischen 130°C und 170°C und noch weiter bevorzugt im Wesentlichen auf 150°C aufgeheizt wird. Bei diesen Temperaturen hat sich das erfindungsgemäße Verfahren als besonders wirkungsvoll gezeigt.

Grundsätzlich ist es vorteilhaft, dass das Aufheizen des Garraumbodens bis auf eine Temperatur von dessen Oberfläche durchgeführt wird, die abhängig ist von der Menge der zugeführten Milch, der Ausgangstemperatur der Milch und/oder der Fähigkeit des Garraumbodens zur Wärmeenergiespeicherung. Zur Vermeidung eines zu starken Kühlens des Garraumbodens beim Einfüllen der Milch wird sichergestellt, dass die Temperatur der Oberfläche des Garraumbodens nach Einfüllen der Milch im Wesentlichen 30°C, bevorzugt im Wesentlichen 60°C nicht unterschreitet.

Das Verfahren kann insbesondere dann sehr erfolgreich das Anbrennen der Milch verhindern, wenn die Menge des eingefüllten Wassers in Abhängigkeit von der Fläche des Garraumbodens derart abgemessen wird, dass 0,1 bis 5 Liter Wasser pro 0,5 m² Garraumboden, bevorzugt 0,5 bis 2 Liter Wasser und weiter bevorzugt im wesentlichen 1 Liter Wasser pro 0,5 m² eingefüllt werden.

Vorteilhafterweise kann die Milch bis in einen Temperaturbereich zwischen 92°C und 98°C, bevorzugt auf 95°C erhitzt werden. Herkömmlich musste die Maximaltemperatur der Milch reduziert werden, etwa auf die Erhitzung bis nur in einen Bereich bis maximal 90°C, um die Anbrennneigung zumindest etwas zu reduzieren. Das ist erfindungsgemäß nicht mehr erforderlich, so dass eine an sich erstrebenswerte höhere Temperatur erreichbar ist.

Weiterhin hat sich gezeigt, dass es von Vorteil ist, dass die erhitzte Milch nach Erreichen der angestrebten Endtemperatur in einem Zeitraum von 10 Sekunden bis 10 Minuten, bevorzugt im Wesentlichen 1 Minute weiterköchelt.

Mit dem erfindungsgemäßen Verfahren lässt sich nicht nur Milch anbrennfrei erhitzen, sondern auch eine Speisezubereitung durchführen, bis eine milchhaltige Speise erreicht wird. Hierzu ist vorgesehen, dass zu der erhitzten Milch nach Erreichen von deren Endtemperatur gleich oder in zeitlichem Abstand weitere Nahrungsmittel hinzugegeben werden, und dass aus der Mischung aus der erhitzten Milch und den zugegebenen Nahrungsmitteln eine warme oder heiße Speise zubereitet wird. Eine bevorzugte Zubereitung einer solchen Speise ist die Zubereitung von Milchreis durch Zugabe von Milch und Zucker, wobei die Mischung für einen Zeitraum zwischen 10 und 15 Minuten, insbesondere von im Wesentlichen 12 Minuten, unter Druck im Garraum gegart wird. Dies erfolgt bei geschlossenem Deckel des Gargeräts.

Der hierzu eingesetzte Druckvorgang ermöglicht ein Druckgaren, ohne dass der Nutzer bzw. Koch separat tätig werden muss. Wie die Erfinder festgestellt haben, kann der Reis in der Milch für vorzugsweise 12 Minuten druckgegart werden, ohne dass ein Rührvorgang durchgeführt werden muss. Dennoch wird ein Anbrennen vermieden.

Selbstverständlich können weitere Nahrungsmittel zur erhitzten Milch zugegeben werden, um entsprechende Milchspeisen oder Milchmischgetränke herzustellen.

Am Beispiel von Milchreis wird im Folgenden ein Ablaufplan zu dessen Herstellung angegeben, der sich als besonders zuverlässig herausgestellt hat. Er besteht aus den folgenden Schritten:
- Auswählen und Starten des Garprogramms Milchreis durch den Benutzer;
- automatisches Aufheizen des Tiegelbodens auch 150°C
   - mit Rückmeldung des Gargeräts, wenn 150°C erreicht sind
   - ab diesem Zeitpunkt wird die Temperatur gehalten → der Benutzer entscheidet, wann es weitergeht. Er muss für den nächsten Schritt die Milch griffbereit am Gargerät stehen haben.
- Bestätigung durch den Benutzer;
- automatisches Einfüllen des Wassers (1 Liter bei einer gängigen Tiegelgröße eines weitverbreiteten Gargerätes, wie es beispielsweise von der Anmeldering unter der Marke "FlexiChef" angeboten wird);
- Einfüllen der Milch durch den Benutzer;
- Bestätigung durch den Benutzer;
   automatisches Schließen des Deckels (geht schneller mit geschlossenem Deckel, ist aber kein Druckgaren);
- Milch erhitzen bis 95°C;
- nach Erreichen der Zieltemperatur 1 Minute weiterköcheln (auf diese Weise wird sichergestellt, dass die gesamte Milch 95°C erreicht hat. Es sind große Mengen, z.B. 50 Liter Milch möglich.);
- automatisches Öffnen des Deckels;
- Einrühren der Zutat(en) Reis, Zucker, ggf. Gewürz;
- automatisches Schließen des Deckels;
- Verriegeln des Deckels durch den Benutzer;
- Druckgaren für 12 Minuten (bei einem von der Anmelderin angebotenen bewährten Gargerät "FlexiChef" wird hierzu beispielsweise die Stufe 1 für empfindliche Speisen eingestellt);
- Entriegeln des Deckels;
- automatisches Öffnen des Deckels;
- Milchreis verrühren; unter gelegentlichen Rühren 10 Minuten köcheln lassen (beziehungsweise ziehen lassen, dabei gelegentlich rühren gegen Verklumpen und um zu diesem späten Zeitpunkt ein Anbrennen zu verhindern, da bei Abbinden des Reisbreis keine automatische Umwälzung mehr stattfinden kann).

Mit einer entsprechenden Gerätesteuerung und geschickter Vorgehensweise lässt sich das erfindungsgemäße Verfahren weiter optimieren. Diese Optimierung betrifft im Wesentlichen die genauere Anpassung der Temperatur der Oberfläche des Garraumbodens in Abhängigkeit von der Menge der zugeführten Milch, der Ausgangstemperatur der Milch und/oder der Fähigkeit des Garraumbodens zur Wärmeenergiespeicherung. Wird nämlich besonders kalte Milch und/oder eine besonders große Menge an Milch in den Garraum eingefüllt, so kann beispielsweise eine Vorheiztemperatur von 150°C zu niedrig sein. Man stelle sich 60 Liter Milch direkt aus dem Kühlhaus vor, die auf einmal in einen Garraum eingegeben werden. Auch ein vorgeheizter Garraumboden in einem Tiegel fällt mit seiner Temperatur dann deutlich ab. Wird diese voraussehbare bzw. durch Sensoren feststellbare Zufuhr von zu kalter Milch bzw. zuviel Milch aber durch die Gerätesteuerung berücksichtigt, so kann die Vorheiztemperatur entsprechend höher gewählt werden oder eine hinreichende Wärmeenergiemenge wird in dem Wärmeenergiespeicherelement vorrätig gehalten, um dem absehbaren Temperaturabfall entgegenwirken zu können. Auf diese Weise kann sichergestellt werden, dass die gewünschte Eigendurchmischung der eingefüllten Milch doch in ausreichendem Maße beginnt und so das Entstehen von Ablagerungen, d.h. von Anbrennbereichen von vornherein vermieden wird.

Wie Tests ergeben haben, ist die Fähigkeit des Garraumbodens zur Speicherung von Wärmeenergie in etwa direkt proportional zu der zubereitbaren Menge an Milch.

Weitere Einzelheiten, Merkmale und Vorteile der vorliegenden Erfindung ergeben sich aus der nachfolgenden Beschreibung eines Ausführungsbeispiels unter Bezugnahme auf die Zeichnungen. Darin zeigt:
- Fig. 1: eine Schnittansicht eines Gargeräts zur Durchführung des erfindungsgemäßen Verfahrens mit eingefülltem Milch;
- Fig. 2: eine Schnittansicht des Gargeräts von Fig. 1 mit eingefüllter Milch und schematischer Darstellung des Konvektionsvorgangs beim Erwärmen der Milch im Garraum.

In den Figuren sind gleiche Elemente mit gleichen Bezugsziffern bzw. Buchstaben versehen.

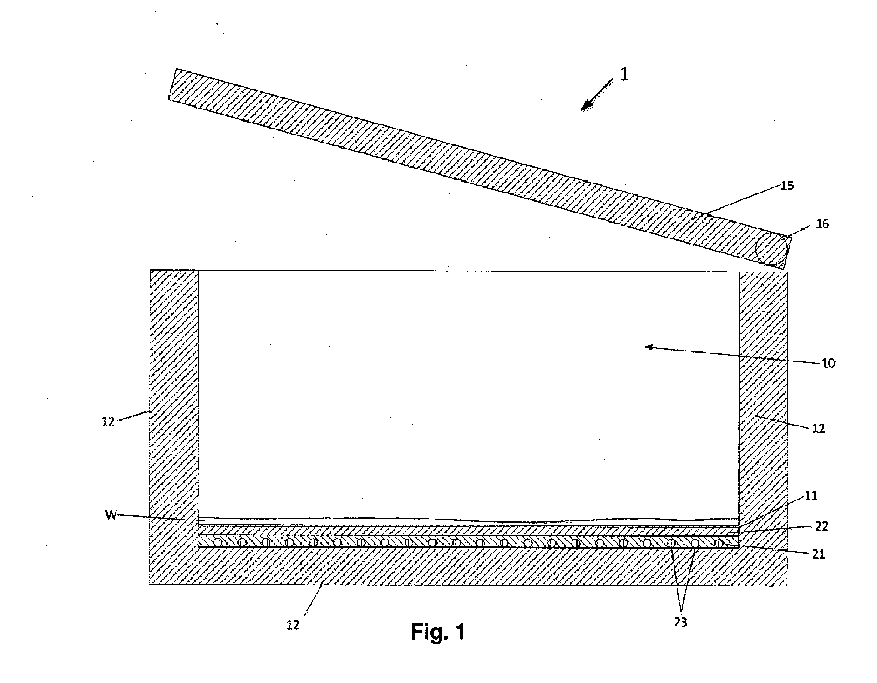

In Fig. 1 ist in Schnittansicht schematisch ein Gargerät 1 dargestellt. Das Gargerät 1 weist einen Garraum auf, der einen relativ dünnen Garraumboden 11 aufweist und eine umlaufende Wandung 12, die sich unterhalb des Garraumbodens und seitlich nach oben erstreckt und damit den Garraum 10 umgibt. Die Garraumwandung 12 ist in Form eines bevorzugt verschweißten Garraummantels ausgebildet.

Ein Deckel 15 dient zum Verschließen des Garraums 10 und ist seitlich schwenkbar an einem Gelenk 16 angelenkt. Nach Schließen des Deckels 15 kann insbesondere auch ein Druckgaren im Garraum 10 durchgeführt werden.

Unterhalb der Oberfläche des Garraumbodens 11 ist ein Wärmeenergiespeicherelement 22 angeordnet, das vorzugsweise aus einer Stahlplatte gebildet ist und damit in der Lage ist, eingeführte Wärme zu speichern.

Unterhalb des Wärmeenergiespeicherelements 22 ist das Heizelement 21 bzw. die Gargerätheizung angeordnet. Der Aufbau diese Heizelements aus einer der Heizplatte ist analog zu jener, wie es in der deutschen Patentschrift DE 44 05 232 der Anmelderin beschrieben. Heizrohre 23 sind in dem plattenförmigen Heizelement 21 ausgebildet, wobei das plattenförmige Heizelement 21 aus Aluminium besteht, was eine besonders gute Wärmeleitfähigkeit besitzt.

Wie aus Fig. 1 ersichtlich, befindet sich oberhalb der Oberfläche des Garraumbodens 11 eine dünne Wasserschicht W wobei Fig. 1 den Zustand nach Einfüllen des und noch nicht ganz verdampften Wassers zeigt.

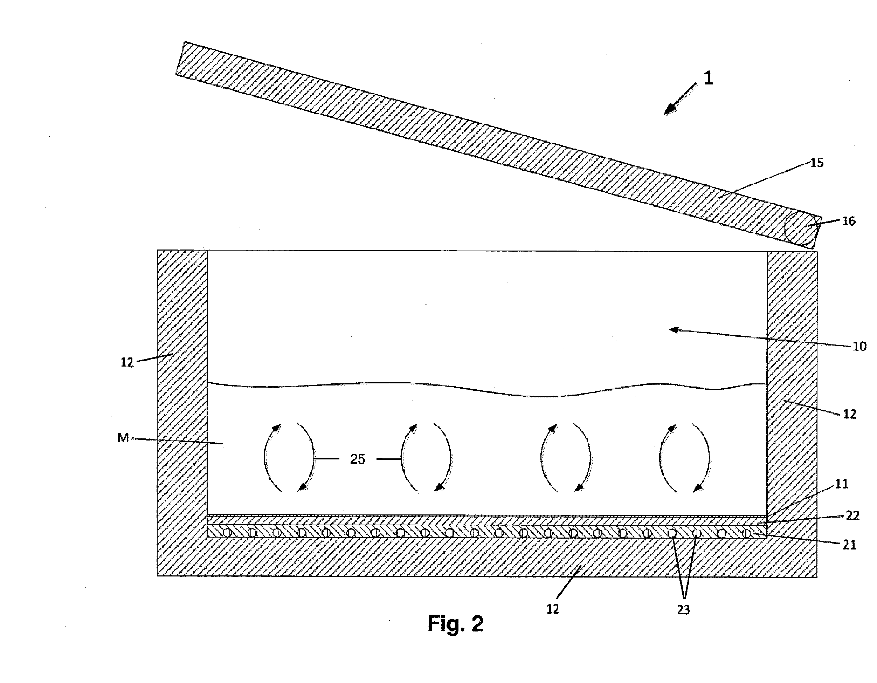

In Fig. 2 ist das Wasser W oberhalb der Oberfläche des Garraumbodens 11 verdampft bzw. mit der Milch M vermischt und durch die Pfeile 25 wird die Bewegung der Milchpartikel innerhalb der Milch M während des Aufheizens schematisch symbolisiert, d.h. die Milch befindet sich ständig in Bewegung und Wärmeaustausch zwischen den wärmeren Milchpartikeln und den kühleren Milchpartikeln.

Wie ersichtlich, nimmt der Garraumboden 11 die gesamte Fläche unter dem Garraum 10 ein. In dem Wärmeenergiespeicherelement 22 können beispielsweise Temperatursensoren (nicht dargestellt) angeordnet sein. Diese Temperatursensoren können direkt die Temperatur des Garraumbodens 11 messen. Durch den schichtförmigen Aufbau wird die Wärmeverteilung noch gleichmäßiger. Mittels der erwähnten Sensoren kann die Temperatur während des im folgenden beschriebenen Vorgangs gemessen werden, während die Temperatur des Gargutes über einen oder mehrere Sensoren in der Garraumwandung 12 (nicht dargestellt) gemessen werden kann.

Im Garraum 10 des Gargerätes soll heiße Milch zubereitet werden. Zu diesem Zweck wird zunächst mittels des Heizelements 21 der Garraumboden 11 erhitzt. Wenn der Garraumboden 11 und in der angedeuteten Ausführungsform auch das Wärmeenergiespeicherelement 22 die Zieltemperatur erreicht hat, beispielsweise 150°C, ist das Gargerät bereit für weitere Verfahrensschritte.

Nach Erreichen dieser gewünschten Temperatur kann dann entweder manuell oder auch automatisch mit einer automatischen Zuführeinrichtung (nicht dargestellt) eine vorher festgelegte Menge Wasser W in den Garraum 10 eingefüllt werden. Die eingefüllte vorbestimmte Menge an Wasser W befindet sich gemäß Fig. 1 oberhalb der Oberfläche des Garraumbodens 11.

Die vorbestimmte Menge an Wasser kommt in Kontakt mit der heißen Oberfläche des Garraumbodens 11 und benetzt diese Oberfläche völlig, wobei sie bei der existierenden Temperatur von 150°C sofort beginnt zu verdampfen und damit den Garraumboden abkühlt. Ein Abkühlen der darunterliegenden Schichten erfolgt jedoch nicht, insbesondere wird das Wärmeenergiespeicherelement 22 nicht abgekühlt.

Bevor das Wasser wie im Garraum 10 vollständig verdampft ist, wird die vorbereitete Menge an zuzubereitender Milch M in den Garraum eingegeben. Die Menge M an Milch ist, wie in Fig. 2 dargestellt, wesentlich größer als die Menge von Wasser, wie in Fig. 1 dargestellt. Die noch kalte Milch M kommt in Berührung mit der abgekühlten Oberfläche des Garraums 11. Die Wärmeenergie aus dem Wärmeenergiespeicher 22 und dem Heizelement 21 gelangt wieder an die Oberfläche des Garraumbodens 11 und damit an die Milch, allerdings sehr gleichmäßig und über die ganze Fläche des Garraumbodens 11 gleichmäßig verteilt.

Dadurch kommt es nicht zu einem Anbrennen der Milch M am Garraumboden 11, wobei die Milch kontinuierlich weiter erhitzt wird, bis sie die gewünschte Temperatur der heißen Milch erreicht hat.

### Bezugszeichenliste

- 1 -: Gargerät
- 10 -: Garraum
- 11 -: Garraumboden
- 12 -: Garraumwandung
- 15 -: Deckel
- 16 -: Gelenk
- 21 -: Heizelement
- 22 -: Wärmeenergiespeicherelement
- 23 -: Heizrohre

- M -: Milch
- W -: Wasser

## Patentansprüche

1. Verfahren zum Zubereiten von heißer Milch (M) in einem Garraum (10), der einen beheizbaren Garraumboden (11) und eine umlaufende Wandung (12) aufweist, **gekennzeichnet durch** die folgenden Schritte:
- Gleichmäßiges Aufheizen des beheizbaren Garraumbodens (11) auf eine Temperatur gleich oder größer 100°C und Bereitstellen einer großen Wärmeenergiemenge, vorzugsweise mittels eines Wärmeenergiespeicherelements (22),
- Einfüllen einer Menge Wasser (W) in den Garraum (10), die im Vergleich zur Menge der zuzubereitenden Milch (M) gering ist,
- Verdampfen des Wassers (W) bis maximal auf eine Restmenge, die den Garraumboden (11) gerade noch bedeckt,
- Einfüllen der Menge der zuzubereitenden Milch (M) zu der Restmenge des Wassers (W),
- Erhitzen der Milch (M) auf die gewünschte Temperatur, wobei aufgrund der bereitgestellten großen Wärmeenergiemenge ein deutliches Abkühlen des beheizbaren Garraumbodens (11) vermieden wird.

2. Verfahren nach Anspruch 1, **dadurch gekennzeichnet, dass** beim Aufheizen des Garraumbodens (11) dessen Oberfläche auf eine Temperatur von zwischen 100°C und 200°C, bevorzugt zwischen 130°C und 170°C und weiter bevorzugt im Wesentlichen auf 150°C aufgeheizt wird.

3. Verfahren nach Anspruch 1, **dadurch gekennzeichnet, dass** das Aufheizen des Garraumbodens (11) bis auf eine Temperatur der Oberfläche des Garraumbodens (11) durchgeführt wird, die abhängig ist von der Menge der zugeführten Milch (M), der Ausgangstemperatur der Milch (M) und/oder der Fähigkeit des Garraumbodens (11) zur Wärmeenergiespeicherung.

4. Verfahren nach einem der Ansprüche 1 bis 3, **dadurch gekennzeichnet, dass** die Temperatur der Oberfläche des Garraumbodens (11) nach Einfüllen der Milch (M) im Wesentlichen 30°C, bevorzugt im Wesentlichen 60°C nicht unterschreitet.

5. Verfahren nach einem der Ansprüche 1 bis 4, **dadurch gekennzeichnet, dass** die Menge des eingefüllten Wassers (W) in Abhängigkeit von der Fläche des Garraumbodens (11) derart abgemessen wird, dass 0,1 bis 5 l Wasser pro 0,5 m² Garraumboden, bevorzugt 0,5 bis 2 l Wasser, weiter bevorzugt im Wesentlichen 1 l Wasser pro 0,5 m² eingefüllt werden.

6. Verfahren nach einem der Ansprüche 1 bis 5, **dadurch gekennzeichnet, dass** die Menge des einzufüllenden Wassers (W) von der Temperatur der Oberfläche des Garraumbodens (11) vor dem Einfüllen des Wassers (W) abhängig ist.

7. Verfahren nach einem der Ansprüche 1 bis 6, **dadurch gekennzeichnet, dass** die Milch (M) bis in einen Temperaturbereich zwischen 92°C und 98°C, bevorzugt auf 95°C erhitzt wird.

8. Verfahren nach einem der Ansprüche 1 bis 7, **dadurch gekennzeichnet, dass** die erhitzte Milch (M) nach Erreichen der angestrebten Endtemperatur in einem Zeitraum von 10 sec bis 10 min, bevorzugt im Wesentlichen 1 min weiterköchelt.

9. Verfahren nach einem der Ansprüche 1 bis 8, **dadurch gekennzeichnet, dass** der erhitzten Milch (M) nach Erreichen der Endtemperatur unmittelbar oder in einem zeitlichen Abstand weitere Nahrungsmittel hinzugegeben werden, zur Zubereitung einer entsprechenden Speise, wobei bei Zugabe von Reis und Zucker die Mischung für einen Zeitraum zwischen 10 und 15 min, insbesondere von im Wesentlichen 12 min, unter Druck im Garraum (10) gegart wird.

## Claims

1. A method for the preparation of hot milk (M) in a cooking chamber (10), which provides a heatable cooking-chamber base (11) and a peripheral wall (12),
**characterised by** the following steps:
- Uniform heating of the heatable cooking-chamber base (11) to a temperature equal to or greater than 100°C and provision of a large quantity of thermal energy, preferably by means of a thermal-energy storage element (22),
- Filling into the cooking chamber (10) a quantity of water (W) which is small by comparison with the quantity of milk (M) to be prepared,
- Evaporation of the water (W) maximally to a residual quantity which only just covers the cooking-chamber base (11),
- Filling the quantity of the milk (M) to be prepared into the residual quantity of water (W),
- Heating the milk (M) to the desired temperature, wherein a significant cooling of the heatable cooking-chamber base (11) is avoided because of the large quantity of thermal energy provided.

2. The method according to claim 1,
**characterised in that**,
in the case of the heating of the cooking-chamber base (11), its surface is heated to a temperature between 100°C and 200°C, preferably between 130°C and 170°C, and by further preference substantially to 150°C.

3. The method according to claim 1,
**characterised in that**
the heating of the cooking-chamber base (11) is implemented up to a temperature of the surface of the cooking-chamber base (11) which is dependent upon the quantity of milk (M) supplied, the output temperature of the milk (M) and/or the capability of the cooking-chamber base (11) for storage of thermal energy.

4. The method according to any one of claims 1 to 3,
**characterised in that**
the temperature of the surface of the cooking-chamber base (11) after the filling of the milk (M) does not fall substantially below 30°C, preferably not substantially below 60°C.

5. The method according to any one of claims 1 to 4,
**characterised in that**
the quantity of filled water (W) is dimensioned dependent upon the area of the cooking-chamber base (11) in such a manner that 0.1 up to 5 L of water per 0.5 m² cooking-chamber base, preferably 0.5 to 2 L of water, by further preference substantially 1 L of water per 0.5 m² are filled.

6. The method according to any one of claims 1 to 5,
**characterised in that**
the quantity of water (W) to be filled is dependent upon the temperature of the surface of the cooking-chamber base (11) before the filling of the water (W).

7. The method according to any one of claims 1 to 6,
**characterised in that**
the milk (M) is heated up to a temperature range between 92°C and 98°C, preferably to 95°C.

8. The method according to any one of claims 1 to 7,
**characterised in that**
the heated milk (M) continues to simmer after reaching the desired final temperature for a period from 10 seconds to 10 min, preferably substantially 1 min.

9. The method according to any one of claims 1 to 8,
**characterised in that**,
directly or within a time interval after reaching the final temperature, further foodstuffs are added to the heated milk (M) for the preparation of a corresponding dish, wherein, with the addition of rice and sugar, the mixture is cooked under pressure in the cooking chamber (10) for a period between 10 and 15 min, especially of substantially 12 min.

## Revendications

1. Procédé de préparation de lait chaud (M) dans un compartiment de cuisson (10) qui présente un fond de compartiment de cuisson (11) chauffable et une paroi (12) périphérique, **caractérisé par** les étapes suivantes :
- chauffer uniformément le fond de compartiment de cuisson (11) chauffable à une température égale ou supérieure à 100 °C et fournir une quantité d'énergie thermique importante de préférence au moyen d'un élément accumulateur d'énergie thermique (22) ;
- verser dans le compartiment de cuisson (10) une quantité d'eau (W) qui est faible en comparaison de la quantité de lait (M) à préparer ;
- faire évaporer l'eau (W) jusqu'à obtenir au maximum une quantité résiduelle qui recouvre encore juste le fond de compartiment de cuisson (11),
- verser la quantité de lait (M) à préparer dans la quantité résiduelle d'eau (W) ;
- chauffer le lait (M) à la température souhaitée, en évitant un net refroidissement du fond de compartiment de cuisson (11) chauffable, du fait de la fourniture d'une quantité importante d'énergie thermique.

2. Procédé selon la revendication 1, **caractérisé en ce que** lorsque le fond de compartiment de cuisson (11) est chauffé, la surface de ce dernier est chauffée à une température comprise entre 100 °C et 200 °C, de préférence à une température comprise entre 130 °C et 170 °C, et de manière davantage préférée essentiellement à une température de 150 °C.

3. Procédé selon la revendication 1, **caractérisé en ce que** le fond de compartiment de cuisson (11) est chauffé jusqu'à une température de la surface du fond de compartiment de cuisson (11), qui dépend de la quantité de lait (M) amenée, de la température de départ du lait (M) et/ou de la capacité du fond de compartiment de cuisson (11) à accumuler de l'énergie thermique.

4. Procédé selon l'une quelconque des revendications 1 à 3, **caractérisé en ce que** la température de la surface du fond de compartiment de cuisson (11) ne dépasse pas, essentiellement 30 °C, de préférence essentiellement 60 °C, après que l'on ait versé le lait (M).

5. Procédé selon l'une quelconque des revendications 1 à 4, **caractérisé en ce que** la quantité d'eau (W) versée est mesurée en fonction de la surface du fond de compartiment de cuisson (11) de telle manière que l'on verse 0,1 à 5 1 d'eau pour 0,5 m² du fond de compartiment de cuisson, de préférence 0,5 à 2 1 d'eau, de manière davantage préférée essentiellement 1 1 d'eau pour 0,5 m².

6. Procédé selon l'une quelconque des revendications 1 à 5, **caractérisé en ce que** la quantité d'eau (W) à verser dépend de la température de la surface du fond de compartiment de cuisson (11) avant que l'on verse l'eau (W).

7. Procédé selon l'une quelconque des revendications 1 à 6, **caractérisé en ce que** le lait (M) est chauffé à une température comprise dans la plage de température allant de 92 °C à 98 °C, de préférence à une température de 95 °C.

8. Procédé selon l'une quelconque des revendications 1 à 7, **caractérisé en ce que** le lait (M) chauffé mijote une fois la température définitive souhaitée atteinte pendant une durée allant de 10 secondes à 10 minutes, de préférence essentiellement pendant 1 minute.

9. Procédé selon l'une quelconque des revendications 1 à 8, **caractérisé en ce que** des denrées alimentaires supplémentaires sont ajoutées au lait (M) chauffé une fois la température définitive atteinte directement ou de manière espacée dans le temps, afin de préparer un aliment correspondant, sachant que lorsqu'on ajoute du riz et du sucre, le mélange cuit dans le compartiment de cuisson (10) sous pression pendant une durée comprise entre 10 et 15 minutes, en particulier pendant essentiellement 12 minutes.
